# Europäisches Patentamt
# European Patent Office
# Office européen des brevets

(11) Veröffentlichungsnummer: **0 191 450**
**B1**

(12) # EUROPÄISCHE PATENTSCHRIFT

(45) Veröffentlichungstag der Patentschrift:
18.05.88

(51) Int. Cl.⁴: **B 29 B 7/60,** B 29 B 7/86 //
B29K105/04

(21) Anmeldenummer: 86101677.2

(22) Anmeldetag: 10.02.86

(54) Einrichtung zum Mischen und Konstanthalten des Druckes von Reaktionsharzmassen.

(30) Priorität: 14.02.85 DE 3505124

(43) Veröffentlichungstag der Anmeldung:
20.08.86 Patentblatt 86/34

(45) Bekanntmachung des Hinweises auf die Patenterteilung:
18.05.88 Patentblatt 88/20

(84) Benannte Vertragsstaaten:
AT CH DE FR GB IT LI NL

(56) Entgegenhaltungen:
DE-A-1 778 121
DE-B-2 543 877
GB-A-1 340 483
GB-A-2 005 589

(73) Patentinhaber: Siemens Aktiengesellschaft Berlin
und München, Wittelsbacherplatz 2, D-8000
München 2 (DE)

(72) Erfinder: Habrich, Reiner, Dipl.- Ing., Reiherweg
14, D-8011 Kirchheim (DE)
Erfinder: Bauer, Manfred, Fischbachauer Strasse
13, D-8000 München 90 (DE)

LIBER, STOCKHOLM 1988

## Beschreibung

Die Erfindung betrifft eine Einrichtung zum Mischen und Konstanthalten des Druckes von Reaktionsharzmassen nach dem Oberbegriff des Anspruchs 1.

Reaktionsharzmassen werden durch Mischen von genau vorgegebenen Mengen Harz und Härter hergestellt, wobei in vielen Fällen auch mehrere Harze und mehrere Härter verwendet werden. Außerdem können auf die Harz- und die Härterkomponente auch Zusatzstoffe wie Füllstoffe, Farbstoffe, Haftvermittler, Beschleuniger und dergleichen verteilt werden. Bei der automatischen Herstellung derartiger Reaktionsharzmassen aus beispielsweise einer Harz- und einer Härterkomponente mittels oszillierender oder rotierender Verdrängerpumpen und statischen oder dynamischen Durchlaufmischern ist es oftmals erforderlich, den Strom der reaktiven Harzmasse kontinuierlich zu gestalten und/oder unter einem bestimmten Druck zu halten. Dies trifft insbesondere dann zu, wenn die Reaktionsharzmasse unmittelbar nach dem Vermischen der beiden Ausgangskomponenten in eine geschlossene Form eingebracht und unter Druck gehärtet oder geliert wird. Weiterhin trifft dies zu, wenn der Durchlaufmischer einer derartigen Harzaufbereitungsanlage mit einer Vielfachdosiervorrichtung gekoppelt wird, da zur exakten Funktion des Dosierers ein Materialpuffer unter definiertem Druck notwendig ist. Besondere Probleme entstehen bei der Verwendung hochreaktiver Harzmassen mit einer Gebrauchsdauer von weniger als 1 Stunde und/oder bei schnell sedimentierenden, gefüllten Reaktionsharzmassen. Hierbei ist es erforderlich, die Verweildauer der Reaktionsharzmassen in der Anlage äußerst kurz zu halten und die Ablagerung von Reaktionsharzmasse und/oder Füllstoff zu vermeiden.

Aus der DE-AS-27 46 050, die den Ausgangspunkt der vorliegenden Anmeldung bildet, ist es bekannt, zum Ausgleich der Pulsation und zur Druckkonstanthaltung bei der automatischen Aufbereitung reaktiver Harzmassen dem statischen oder dem dynamischen Durchlaufmischer eine sogenannte Nachdrückvorrichtung nachzuschalten. Die Verwendung einer derartigen aus Zylinder und beweglichem Kolben bestehenden Nachdrückvorrichtung führt jedoch zu einer längeren Verweildauer der Reaktionsharzmasse in den Rohrleitungen bzw. zu einem zusätzlichen Druckverlust im Massestrom. Insbesondere bei hochreaktiven Harzmassen bildet sich dann an den Wandungen schnell eine härtende Harzschicht, was entsprechende Querschnittsverengungen zur Folge hat. Neben häufigen Betriebsunterbrechungen erfordert die Beseitigung derartiger Querschnittsverengungen einen hohen Wartungs- und Reinigungsaufwand.

Der Erfindung liegt die Aufgabe zugrunde, eine Einrichtung zum Mischen und Konstanthalten des Druckes von Reaktionsharzmassen zu schaffen, bei welcher die Entstehung von Querschnittsverengungen durch Ablagerung von Reaktionsharzmasse und/oder Füllstoff zumindest weitgehend vermieden wird.

Diese Aufgabe wird bei einer gattungsgemäßen Einrichtung durch die kennzeichnenden Merkmale des Anspruchs 1 gelöst.

Der Erfindung liegt die Erkenntnis zugrunde, daß durch die Integration des Durchlaufmischers in den Kolben der Nachdrückvorrichtung die im Durchlaufmischer frisch bereitete Reaktionsharzmasse direkt in den Zylinder der Nachdrückvorrichtung gelangt und daß dabei die zuerst in den Zylinder eingebrachte Reaktionsharzmasse als erste wieder ausgefördert wird. Die gesamte Einrichtung funktioniert somit im direkten Durchlauf, wodurch die Verweildauer der Reaktionsharzmasse auf ein Minimum beschränkt und die Gefahr einer Ablagerung von Reaktionsharzmasse und/oder Füllstoff zumindest weitgehend vermieden wird. Ein weiterer Vorteil der erfindungsgemäßen Einrichtung besteht darin, daß eine Nachfolgeeinrichtung - wie z. B. eine Vielfachdosiervorrichtung, eine geschlossene Gießform oder ein Gießventil - direkt an den Zylinder der Nachdrückvorrichtung angeschlossen werden kann und somit äußerst kurze Verbindungen erzielt werden. Dies ist insbesondere im Hinblick auf die notwendige kurze Verweilzeit der bereits aktivierten Harzmasse in der Anlage von entscheidender Bedeutung.

Gemäß einer weiteren Ausgestaltung der Erfindung ist in den Kolben ein statischer Durchlaufmischer integriert. Da bei derartigen statischen Durchlaufmischern kein rotierendes Mischorgan benötigt wird, gestaltet sich die Integration in den beweglichen Kolben der Nachdrückvorrichtung besonders einfach. Insbesondere kann der statische Durchlaufmischer dann mit einem Minimum an Aufwand durch in eine axiale Bohrung des Kolbens eingesetzte Mischelemente gebildet werden.

Die Gefahr von Ablagerungen am Boden des Kolbens der Nachdrückvorrichtung kann dadurch noch weiter reduziert werden, daß in Richtung des Förderstromes nach der Austrittsöffnung des Durchlaufmischers eine im Abstand zum Boden des Kolbens angeordnete erste Strömungsleiteinrichtung befestigt ist. In entsprechender Weise kann dann auch die Gefahr von Ablagerungen am Boden des Zylinders dadurch noch weiter reduziert werden, daß in Richtung des Förderstromes vor der Austrittsöffnung des Zylinders eine im Abstand zum Boden des Zylinders angeordnete zweite Strömungsleiteinrichtung befestigt ist. Mit Hilfe derartiger Strömungsleiteinrichtungen kann der Förderstrom so umgelenkt werden, daß bei zumindest annähernd gleichen Strömungsgeschwindigkeiten die Strömung in den für Ablagerungen kritischen Bereichen erhöht wird und insbesondere Toträume der Strömung vermieden werden. Dies kann auf besonders einfache Weise dann realisiert werden, wenn die Strömungsleiteinrichtung scheibenförmig ausgebildet ist. Außerdem hat es sich im Hinblick auf eine Optimierung der Strömungsverhältnisse als besonders vorteilhaft herausgestellt, wenn in die Strömungsleiteinrichtung ein für den Durchlaß eines Teils des Förderstromes bemessenes zentrales Loch eingebracht ist.

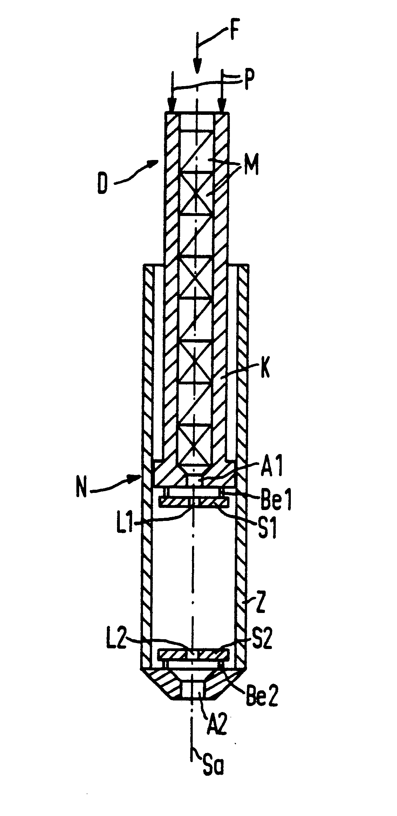

Ein Ausführungsbeispiel der Erfindung ist in der Zeichnung dargestellt und wird im folgenden näher beschrieben.

Die Zeichnung zeigt in stark vereinfachter schematischer Darstellung eine Einrichtung zum Mischen und Konstanthalten des Druckes von Reaktionsharzmassen, bei welcher in Richtung des durch einen Pfeil F angedeuteten Förderstromes nacheinander ein mit D bezeichneter statischer Durchlaufmischer und der Zylinder Z einer insgesamt mit N bezeichneten Nachdrückvorrichtung durchströmt werden. Der in den beweglichen Kolben K der Nachdrückvorrichtung N integrierte statische Durchlaufmischer D wird dabei durch mehrere, in eine axiale Bohrung B des Kolbens K eingesetzte Mischelemente M gebildet. In Richtung des Förderstromes F gesehen ist nach der gegenüber der axialen Bohrung B verjüngten Austrittsöffnung A1 des statischen Durchlaufmischers D eine im Abstand zum Boden des Kolbens K angeordnete erste Strömungsleiteinrichtung S1 befestigt, in welche ein zentrales Loch L1 eingebracht ist. Die Befestigung der die Form einer Scheibe aufweisenden ersten Strömungsleiteinrichtung S1 am Boden des Kolbens K erfolgt mit Hilfe mehrerer im Profil strömungsgünstig ausgebildeter Beinchen Be1, über welche gleichzeitig auch der Abstand zwischen dem Boden des Kolbens K und der ersten Strömungsleiteinrichtung S1 vorgegeben wird. In Richtung des Förderstromes F gesehen ist vor der Austrittsöffnung A2 des Zylinders Z eine im Abstand zum Boden des Zylinders Z angeordnete zweite Strömungsleiteinrichtung S2 befestigt, in welche ein zentrales Loch L2 eingebracht ist. Die Befestigung der ebenfalls die Form einer Scheibe aufweisenden zweiten Strömungsleiteinrichtung S2 am Boden des Zylinders Z erfolgt auch hier wieder mit Hilfe mehrerer im Profil strömungsgünstig ausgebildeter Beinchen, wobei über diese mit Be2 bezeichneten Beinchen gleichzeitig auch der Abstand zwischen dem Boden des Zylinders Z und der zweiten Strömungsleiteinrichtung S2 vorgegeben wird.

Beim Einsatz der vorstehend beschriebenen Einrichtung in einer Gießharz-Aufbereitungsanlage werden die Harz- und die Härterkomponente über zwangsweise arbeitende volumetrische Dosiereinrichtungen im richtigen Mischungsverhältnis dem statischen Durchlaufmischer D so zugeführt, daß sie diesen synchron durchströmen. Da der statische Durchlaufmischer D in den beweglichen Kolben K der Nachdrückvorrichtung N integriert ist, wird die Verbindung mit den ortsfest angeordneten volumetrischen Dosiereinrichtungen über eine flexible Leitung, beispielsweise über einen aus Polyamid oder einem Fluorelastomer bestehenden flexiblen Schlauch vorgenommen. Beim Durchströmen des statischen Durchlaufmischers D bewirken die Mischelemente M eine vielfache Teilung und Überlagerung der zusammengeführten Komponentenströme, so daß durch die Austrittsöffnung A1 ein homogenes Gemisch der Reaktionsharzmasse in den Zylinder Z der Nachdrückvorrichtung N gelangt. Ein Teil der aus der Austrittsöffnung A1 austretenden Reaktionsharzmasse strömt dann ohne Umlenkung in Richtung der Symmetrieachse Sa der gesamten Einrichtung durch das zentrale Loch L1 der ersten Strömungsleiteinrichtung S1, während der andere Teil am Boden des Kolbens K entlang radial in allen Richtungen nach außen strömt und dann über den zwischen der Innenwandung des Zylinders Z und dem Außenumfang der ersten Strömungsleiteinrichtung S1 gebildeten Ringspalt in axialer Richtung umgelenkt wird. Durch diese Führung des Förderstromes F kann eine Ablagerung von Reaktionsharzmasse und/oder Füllstoff am Boden des Kolbens K mit Sicherheit vermieden werden. Beim Austritt aus dem Zylinder Z strömt ein Teil der Reaktionsharzmasse ohne Umlenkung in Richtung der Symmetrieachse Sa durch das zentrale Loch L2 der zweiten Strömungsleiteinrichtung S2 und durch die Austrittsöffnung A2 des Zylinders Z. Der andere Teil der Reaktionsharzmasse strömt in axialer Richtung durch den zwischen der Innenwandung des Zylinders Z und dem Außenumfang der zweiten Strömungsleiteinrichtung S2 gebildeten Ringspalt und dann am Boden des Zylinders Z entlang radial in allen Richtungen nach innen, bis er in die zunächst kegelstumpfförmig erweiterte Austrittsöffnung A2 eintritt. Durch diese Führung des Förderstromes F wird eine Ablagerung von Reaktionsharzmasse und/oder Füllstoff am Boden des Zylinders Z mit Sicherheit ausgeschlossen. Aus der Austrittsöffnung A2 gelangt die Reaktionsharzmasse dann unmittelbar in eine Nachfolgeeinrichtung, wie z. B. eine Vielfachdosiervorrichtung, eine geschlossene Gießform oder ein Gießventil.

Als Materialien für die Herstellung der in der Zeichnung dargestellten Einrichtung eignen sich Metalle oder Kunststoffe, wie sie bei der Verarbeitung von Reaktionsharzmassen üblich sind. Vorzugsweise werden rostfreie Stähle verwendet. Zur Abdichtung des Kolbens K gegenüber der Innenwandung des Zylinders Z sind in der schematischen Zeichnung nicht näher dargestellte Dichtmanschetten aus Kunststoff vorgesehen, die vorzugsweise als Lippendichtungen ausgebildet sind. Hinter dem mit diesen Dichtmanschetten versehenen Führungsbereich besitzt der Kolben K einen geringeren Durchmesser, wodurch insbesondere ein Klemmen und Verkanten des Kolbens K im Zylinder Z ausgeschlossen werden soll.

Der Kolben K kann in axialer Richtung mit einer durch Pfeile P angedeuteten Kraft belastet werden, welche beispielsweise durch pneumatische oder hydraulische Stellglieder aufgebracht wird. Durch eine entsprechende Steuerung dieser Kraft P kann die Nachdrückvorrichtung N dann Pulsationen des Förderstromes F der Aufbereitungsanlage abpuffern und als Vorrats- und Druckhalter für eine an den Zylinder Z angeschlossene Nachfolgeeinrichtung wirken.

Es ist aber auch möglich, den Kolben K mit dem integrierten Durchlaufmischer D ortsfest anzuordnen und die Kraft P auf den Zylinder Z einwirken zu lassen. In diesem Falle wird dann an die Austrittsöffnung A2 des Zylinders Z eine flexible Verbindungsleitung zu der entsprechenden ortsfest angeordneten Nachfolgeeinrichtung angeschlossen.

**Patentansprüche**

1. Einrichtung zum Mischen und Konstanthalten des Druckes von Reaktionsharzmassen, mit einem Durchlaufmischer und einer in Richtung des Förderstromes nachgeordneten, aus Zylinder und relativ zum Zylinder beweglichem Kolben bestehenden Nachdrückvorrichtung,
gekennzeichnet durch
einen in den Kolben (K) integrierten Durchlaufmischer (D), dessen Austrittsöffnung (A1) unmittelbar in den Zylinder (Z) einmündet.

2. Einrichtung nach Anspruch 1, dadurch gekennzeichnet, daß in den Kolben (K) ein statischer Durchlaufmischer (D) integriert ist.

3. Einrichtung nach Anspruch 2, dadurch gekennzeichnet, daß der statische Durchlaufmischer (D) durch in eine axiale Bohrung (B) des Kolbens (K) eingesetzte Mischelemente (M) gebildet ist.

4. Einrichtung nach einem der vorhergehenden Ansprüche, dadurch gekennzeichnet, daß in Richtung des Förderstromes (F) nach der Austrittsöffnung (A1) des Durchlaufmischers (D) eine im Abstand zum Boden des Kolbens (K) angeordnete erste Strömungsleiteinrichtung (S1) befestigt ist.

5. Einrichtung nach einem der vorhergehenden Ansprüche, dadurch gekennzeichnet, daß in Richtung des Förderstromes (F) vor der Austrittsöffnung (A2) des Zylinders (Z) eine im Abstand zum Boden des Zylinders (Z) angeordnete zweite Strömungsleiteinrichtung (S2) befestigt ist.

6. Einrichtung nach Anspruch 4 oder 5, dadurch gekennzeichnet, daß die Strömungsleiteinrichtung (S1, S2) scheibenförmig ausgebildet ist.

7. Einrichtung nach einem der Ansprüche 4 bis 6, dadurch gekennzeichnet, daß in die Strömungsleiteinrichtung (S1, S2) ein für den Durchlaß eines Teils des Förderstromes (F) bemessenes zentrales Loch (L1, L2) eingebracht ist.

**Claims**

1. Apparatus for the mixing and maintenance of constant pressure of resin-catalyst mixes, with a continuous mixer and a follow-up pressure device arranged downstream in the direction of delivery flow and consisting of a cylinder and a ram which is movable relative to the cylinder, characterised by a continuous mixer (D) which is integrated in the ram (K) and the discharge opening (A1) of which opens out directly into the cylinder (Z).

2. Apparatus according to Claim 1, characterised in that a static continuous mixer (D) is integrated in the ram (K).

3. Apparatus according to Claim 2, characterised in that the static continuous mixer (D) is formed by mixing elements (M) inserted in an axial bore (B) of the ram (K).

4. Apparatus according to one of the preceding Claims, characterised in that a first flow-directing device (S1) is fixed downstream in the direction of the delivery flow (F) from the discharge opening (A1) of the continuous mixer (D), arranged at a distance from the bottom of the ram (K).

5. Apparatus according to one of the preceding Claims, characterised in that a second flow-directing device (S2) is fixed upstream in the direction of the delivery flow (F) from the discharge opening (A2) of the cylinder (Z), arranged at a distance from the bottom of the cylinder (Z).

6. Apparatus according to Claim 4 or 5, characterised in that the flow-directing device (S1, S2) is of disc-shaped design.

7. Apparatus according to one of Claims 4 to 6, characterised in that a central hole (L1, L2), dimensioned for the passage of part of the delivery flow (F), is made in the flow-directing device (S1, S2).

**Revendications**

1. Dispositif de mélange et de maintien sous une pression constante de compositions réactives de résine comprenant un mélangeur continu et un dispositif de maintien de la pression monté en aval, suivant le sens du courant transporté, et constitué d'un cylindre et d'un piston mobile par rapport à ce cylindre, caractérisé par un mélangeur continu (D), qui est intégré au piston (K) et dont l'orifice de sortie (A1) débouche directement dans le cylindre (Z).

2. Dispositif suivant la revendication 1, caractérisé en ce qu'un mélangeur continu (D) statique est intégré au piston (K).

3. Dispositif suivant la revendication 2, caractérisé en ce que le mélangeur continu (D) statique est formé par des éléments mélangeurs (M) montés dans un perçage (B) axial du piston (K).

4. Dispositif suivant l'une des revendications précédentes, caractérisé en ce qu'un premier dispositif conduisant l'écoulement (S1) est disposé à distance du fond du piston (K) et est fixé, dans le sens du courant transporté (F), en aval de l'orifice de sortie (A1) du mélangeur continu (D).

5. Dispositif suivant l'une des revendications précédentes, caractérisé en ce qu'un second dispositif conduisant l'écoulement (S2) est disposé à distance du fond du cylindre (Z) et est fixé, dans le sens du courant transporté (F), en amont de l'orifice de sortie (A2) du cylindre (Z).

6. Dispositif suivant la revendication 4 ou 5, caractérisé en ce que le dispositif conduisant l'écoulement (S1, S2) est en forme de disque.

7. Dispositif suivant l'une des revendications 4 à 6, caractérisé en ce que, dans le dispositif conduisant le courant (S1, S2), est ménagé un trou (L1, L2) central dimensionné pour le passage d'une partie du courant transporté (F).